# EUROPEAN PATENT SPECIFICATION

(11) **EP 2 938 439 B1**
(45) Date of publication and mention of the grant of the patent: **31.07.2019**
(21) Application number: 13866917.1
(22) Date of filing: 30.12.2013
(51) Int. Cl.: B05D 5/12, B60C 1/00

(54) **THIN FILM DIFFUSION BARRIER**
DÜNNSCHICHT-DIFFUSIONSBARRIERE
BARRIÈRE DE DIFFUSION À FILM FIN

(30) Priority: 28.12.2012 US 201261746623 P
(43) Date of publication of application: 04.11.2015
(73) Proprietor: Compagnie Générale des Etablissements Michelin, 63000 Clermont-Ferrand (FR); The Texas A&M University System, College Station, TX 77843-3369 (US)
(72) Inventor: GRUNLAN, Jaime, C., College Station, TX 77840 (US); PRIOLO, Morgan, A., Woodbury, MN 55129 (US); WINSTON, Paul, Greenville, SC 29605 (US); MCHUGH, John, J., Greenville, SC 29605 (US)
(74) Representative: Casalonga
(86) International application number: PCT/US2013/078376
(87) International publication number: WO 2014/106214

(56) References cited:
- EP-A1- 2 267 073
- US-A1- 2008 243 113
- US-A1- 2010 096 597
- US-A1- 2011 200 825
- JANG, WOO-SIK ET AL.: 'Layer-by-layer assembly of thin film oxygen barrier.' THIN SOLID FILMS vol. 516, no. 15, 2008, pages 4819 - 4825, XP022622307
- RAS, ROBIN HA ET AL.: 'Ultrathin hybrid films of clay minerals.' PHYSICAL CHEMISTRY CHEMICAL PHYSICS vol. 9, no. 8, 2007, pages 918 - 932, XP055251564

## Description

### Background of the Invention

### Field of the Invention

This invention relates to the field of diffusion barriers and more specifically to the field of thin film barriers against diffusion of materials such as gas barriers for tires.

### Background of the Invention

Diffusion barriers to gas and vapors are key components in a variety of applications, such as food packaging, flexible electronics, and tires. For instance, there is an increased need for improved barrier performance of tires. Conventional tires are typically composed of rubber and include an inner liner. Drawbacks to conventional tires include permeability of the inner liner. Such permeability may allow oxygen to migrate through the tire carcass to the steel belts, which may facilitate oxidation of the steel belts. Further drawbacks include inefficient air retention by which conventional tires may lose air pressure over a period of time and with use, which may increase rolling resistance of the tire.

Consequently, there is a need for improved diffusion barriers. There are also further needs for improved thin film barriers against fluid and solid diffusion. Moreover, there is a need for improved tires as well as increased air retention by tires.

### BRIEF SUMMARY OF SOME OF THE PREFERRED EMBODIMENTS

These and other needs in the art are addressed in one embodiment by a method for producing a material diffusion barrier comprising a coating on an elastomeric substrate. The method includes exposing the elastomeric substrate to a cationic solution to produce a cationic layer on the elastomeric substrate. The cationic solution comprises a polymer, a salt, or any combinations thereof. The method also includes exposing the cationic layer to an anionic solution to produce an anionic layer on the cationic layer. The anionic solution comprises an anionic polymer, a colloidal particle, a second salt, or any combinations thereof. The coating comprises a bilayer comprising the cationic layer and the anionic layer.

These and other needs in the art are addressed in another embodiment by a method for producing a material diffusion barrier comprising a coating on an elastomeric substrate. The method includes exposing the elastomeric substrate to an anionic solution to produce an anionic layer on the elastomeric substrate. The anionic solution comprises an anionic polymer, a colloidal particle, a salt, or any combinations thereof. The method also includes exposing the anionic layer to a cationic solution to produce a cationic layer on the anionic layer. The cationic solution comprises a polymer, a second salt, or any combinations thereof. The coating comprises a bilayer comprising the cationic layer and the anionic layer.

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other embodiments for carrying out the same purposes of the present invention. It should also be realized by those skilled in the art that such equivalent embodiments do not depart from the spirit and scope of the invention as set forth in the appended claims.

### BRIEF DESCRIPTION OF THE DRAWINGS

For a detailed description of the preferred embodiments of the invention, reference will now be made to the accompanying drawings in which:
Figure 1 illustrates an embodiment of a quadlayer on an elastomeric substrate;
Figure 2 illustrates an embodiment of a quadlayer, an elastomeric substrate; and a primer layer;
Figure 3 illustrates an embodiment of three quadlayers and an elastomeric substrate;
Figure 4 illustrates thickness as a function of the number of quadlayers;
Figure 5 illustrates oxygen transmission rate as a function of the number of quadlayers;
Figure 6 illustrates images of elasticity of coating;
Figure 7 illustrates an embodiment of a bilayer on an elastomeric substrate;
Figure 8 illustrates an embodiment of bilayers of layerable materials and additives;
Figure 9 illustrates an embodiment of bilayers with alternating layers of layerable materials and additives; and
Figure 10 illustrates an embodiment with bilayers of layerable materials and additives.

### DETAILED DESCRIPTION OF THE PREFERRED EMBODIMENTS

In an embodiment, a multilayer thin film coating method provides an elastomeric substrate with a diffusion retardant coating by alternately depositing positive and negative charged layers on the substrate. Each pair of positive and negative layers comprises a layer. In embodiments, the multilayer thin film coating method produces any number of desired layers on substrates such as bilayers, trilayers, quadlayers, pentalayers, hexalayers, heptalayers, octalayers, and increasing layers. Without limitation, a plurality of layers may provide a desired retardant to transmission of material through the elastomeric substrate. The material may be any diffusible material. Without limitation, the diffusible material may be a solid, a fluid, or any combinations thereof. The fluid may be any diffusible fluid such as a liquid, a gas, or any combinations thereof. In an embodiment, the diffusible fluid is a gas.

The layers may have any desired thickness. In embodiments, each layer is between about 10 nanometers and about 2 micrometers thick, alternatively between about 10 nanometers and about 500 nanometers thick, and alternatively between about 50 nanometers and about 500 nanometers thick, and further alternatively between about 1 nanometers and about 100 nanometers thick.

The elastomeric substrate comprises material having viscoelasticity. Any desirable elastomeric substrate may be coated with the multilayer thin film coating method. In an embodiment, the elastomeric substrate is synthetic rubber, natural rubber, or any combinations thereof. In embodiments, the elastomeric substrate includes natural rubber. Without limitation, examples of suitable elastomeric substrates include polyisoprene, polybutadiene, polychloroprene, butadiene-styrene copolymers, acrylonitrilebutadiene copolymers, ethylenepropylene-diene rubbers, polysulfide rubber, nitrile rubber, silicone, polyurethane, butyl rubber, or any combinations thereof. In some embodiments, the rubber comprises a carbon black filled natural rubber formulation vulcanized with sulfur.

The negative charged (anionic) layers comprise layerable materials. The layerable materials include anionic polymers, colloidal particles, salts, or any combinations thereof. In an embodiment, the layerable materials comprise an anionic polymer, a colloidal particle, or any combinations thereof and at least one salt. Without being limited by theory, layerable materials comprising an anionic polymer, a colloidal particle, or any combinations thereof and at least one salt may weaken the bonds and may improve elasticity. Without limitation, examples of suitable anionic polymers include polystyrene sulfonate, polymethacrylic acid, polyacrylic acid, poly(acrylic acid, sodium salt), polyanetholesulfonic acid sodium salt, poly(vinylsulfonic acid, sodium salt), or any combinations thereof. In addition, without limitation, colloidal particles include organic and/or inorganic materials. Further, without limitation, examples of colloidal particles include clays, colloidal silica, inorganic hydroxides, silicon based polymers, polyoligomeric silsesquioxane, carbon nanotubes, graphene, or any combinations thereof. Any type of clay suitable for use in an anionic solution may be used. Without limitation, examples of suitable clays include sodium montmorillonite, hectorite, saponite, Wyoming bentonite, vermiculite, halloysite, or any combinations thereof. In an embodiment, the clay is vermiculite. In some embodiments, the clay is sodium montmorillonite. Any inorganic hydroxide that may provide retardancy to gas or vapor transmission may be used. In an embodiment, the inorganic hydroxide includes aluminum hydroxide, magnesium hydroxide, or any combinations thereof. The salts may include any salts suitable for use with the multilayer thin film coating method. In an embodiment, the salts include salts from the Hofmeister series of anions. In embodiments, the salts include salts from the ions CO₃²⁻, F⁻, SO₄²⁻, H₂PO₄²⁻, C₂H₃O₂⁻, Cl⁻, NO₃⁻, Br⁻, Cl0₃⁻, I⁻, ClO₄⁻, SCN⁻, S₂O₃²⁻, or any combinations thereof. In an embodiment, the salt includes the ion Cl⁻. The salts are of a concentration from about 1 millimolar in solution to about 10 millimolar in solution, alternatively from about 5 millimolar in solution to about 10 millimolar in solution, alternatively from about 1 millimolar in solution to about 100 millimolar in solution, and further alternatively from about 0.1 millimolar in solution to about 100 millimolar in solution.

The positive charge (cationic) layers comprise cationic materials. The cationic materials comprise polymers, salts, or any combinations thereof. In an embodiment, the cationic materials comprise a polymer, and at least one salt. Without being limited by theory, cationic materials comprising a polymer, and at least one salt may weaken bonds and may improve elasticity. The polymers include cationic polymers. Without limitation, examples of suitable cationic polymers include branched polyethylenimine, linear polyethylenimine, cationic polyacrylamide, cationic poly diallyldimethylammonium chloride, poly(allyl amine), poly(allyl amine) hydrochloride, poly(vinyl amine), poly(acrylamide-co-diallyldimethylammonium chloride), or any combinations thereof. The salts may include any salts suitable for use with the multilayer thin film coating method. In an embodiment, the salts include salts from the Hofmeister series of cations. In embodiments, the salts include salts from the ions NH4⁺, K⁺, Na⁺, Li⁺, Mg²⁺, Ca²⁺, Rb⁺, Cs⁺, N(CH₃)₄⁺, or any combinations thereof. In embodiments, the salts include salts from the ions K⁺, Na⁺, or any combinations thereof. In an embodiment, the salts include salts from the ion K⁺. In other embodiments, the salts include salts from the ion Na⁺. Embodiments include the salt comprising NaCl, KCl, or any combinations thereof. In some embodiments, the salt comprises NaCl. In other embodiments, the salt comprises KCl. The salts are of a concentration from about 1 millimolar in solution to about 10 millimolar in solution, alternatively from about 5 millimolar in solution to about 10 millimolar in solution, and alternatively from about 1 millimolar in solution to about 100 millimolar in solution.

In embodiments, the positive and negative layers are deposited on the elastomeric substrate by any suitable method. Embodiments include depositing the positive and negative layers on the elastomeric substrate by any suitable liquid deposition method. Without limitation, examples of suitable methods include bath coating, spray coating, slot coating, spin coating, curtain coating, gravure coating, reverse roll coating, knife over roll (i.e., gap) coating, metering (Meyer) rod coating, air knife coating, or any combinations thereof. Bath coating includes immersion or dip. In an embodiment, the positive and negative layers are deposited by bath. In other embodiments, the positive and negative layers are deposited by spray.

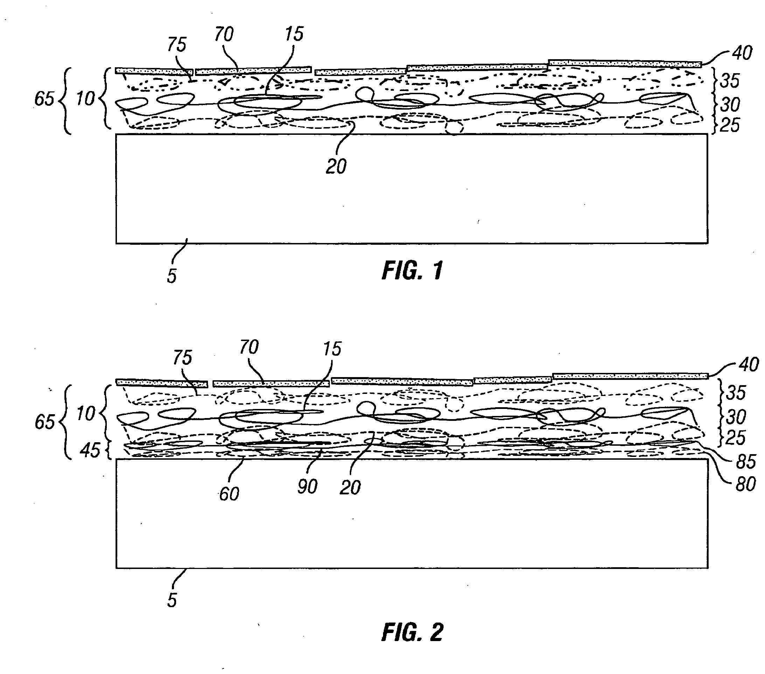

In embodiments, the multilayer thin film coating method provides two pairs of anionic and cationic layers, which two pairs comprise a quadlayer. Embodiments include the multilayer thin film coating method producing a plurality of quadlayers on an elastomeric substrate. Figure 1 illustrates an embodiment of elastomeric substrate 5 with coating 65 of quadlayer 10. In an embodiment to produce the coated elastomeric substrate 5 shown in Figure 1, the multilayer thin film coating method includes exposing elastomeric substrate 5 to cationic molecules in a cationic mixture to produce first cationic layer 25 on elastomeric substrate 5. The cationic mixture contains first layer cationic materials 20. In an embodiment, first layer cationic materials 20 are positively charged In such an embodiment, elastomeric substrate 5 is negatively charged or neutral. Embodiments include elastomeric substrate 5 having a negative charge. Without limitation, a negatively charged elastomeric substrate 5 provides a desired adhesion. The cationic mixture includes an aqueous solution of first layer cationic materials 20. The aqueous solution may be prepared by any suitable method. In embodiments, the aqueous solution includes first layer cationic materials 20 and water. In other embodiments, first layer cationic materials 20 may be dissolved in a mixed solvent, in which one of the solvents is water and the other solvent is miscible with water (e.g., water, methanol, and the like). The solution may also contain colloidal particles in combination with polymers or alone, if positively charged. Any suitable water may be used. In embodiments, the water is deionized water. In some embodiments, the aqueous solution may include from about 0.05 wt.% first layer cationic materials 20 to about 1.50 wt.% first layer cationic materials 20, alternatively from about 0.01 wt.% first layer cationic materials 20 to about 2.00 wt.% first layer cationic materials 20, and further alternatively from about 0.001 wt.% first layer cationic materials 20 to about 20.0 wt.% first layer cationic materials 20. In embodiments, elastomeric substrate 5 may be exposed to the cationic mixture for any suitable period of time to produce first cationic layer 25. In embodiments, elastomeric substrate 5 is exposed to the cationic mixture from about 1 second to about 20 minutes, alternatively from about 1 second to about 200 seconds, and alternatively from about 10 seconds to about 200 seconds, and further alternatively from about instantaneous to about 1,200 seconds, and alternatively from about 1 second to about 5 seconds, and alternatively from about 4 seconds to about 6 seconds, and further alternatively about 5 seconds. In an embodiment, elastomeric substrate 5 is exposed to the cationic mixture from about 4 seconds to about 6 seconds. Without limitation, the exposure time of elastomeric substrate 5 to the cationic mixture and the concentration of first layer cationic materials 20 in the cationic mixture affect the thickness of first cationic layer 25. For instance, the higher the concentration of first layer cationic materials 20 and the longer the exposure time, the thicker the first cationic layer 25 produced by the multilayer thin film coating method.

In embodiments, after formation of first cationic layer 25, the multilayer thin film coating method includes removing elastomeric substrate 5 with the produced first cationic layer 25 from the cationic mixture and then exposing elastomeric substrate 5 with first cationic layer 25 to anionic molecules in an anionic mixture to produce first anionic layer 30 on first cationic layer 25. The anionic mixture contains first layer layerable materials 15. The first layer layerable materials 15 are negatively charged. Without limitation, the positive first cationic layer 25 attracts the anionic molecules to form the cationic -anionic pair of first cationic layer 25 and first anionic layer 30. The anionic mixture includes an aqueous solution of first layer layerable materials 15. In an embodiment, first layer layerable materials 15 comprise polyacrylic acid. The aqueous solution may be prepared by any suitable method. In embodiments, the aqueous solution includes first layer layerable materials 15 and water. First layer layerable materials 15 may also be dissolved in a mixed solvent, in which one of the solvents is water and the other solvent is miscible with water (e.g., ethanol, methanol, and the like). Combinations of anionic polymers and colloidal particles may be present in the aqueous solution. Any suitable water may be used. In embodiments, the water is deionized water. In some embodiments, the aqueous solution may include from about 0.05 wt.% first layer layerable materials 15 to about 1.50 wt.% first layer layerable materials 15, alternatively from about 0.01 wt.% first layer layerable materials 15 to about 2.00 wt.% first layer layerable materials 15, and further alternatively from about 0.001 wt.% first layer layerable materials 15 to about 20.0 wt.% first layer layerable materials 15. In embodiments, elastomeric substrate 5 with first cationic layer 25 may be exposed to the anionic mixture for any suitable period of time to produce first anionic layer 30. In embodiments, elastomeric substrate 5 with first cationic layer 25 is exposed to the anionic mixture from about 1 second to about 20 minutes, alternatively from about 1 second to about 200 seconds, and alternatively from about 10 seconds to about 200 seconds, and further alternatively from about instantaneous to about 1,200 seconds, and alternatively from about 1 second to about 5 seconds, and alternatively from about 4 seconds to about 6 seconds, and further alternatively about 5 seconds. In an embodiment, elastomeric substrate 5 with first cationic layer 25 is exposed to the anionic mixture from about 4 seconds to about 6 seconds. Without limitation, the exposure time of elastomeric substrate 5 with first cationic layer 25 to the anionic mixture and the concentration of first layer layerable materials 15 in the anionic mixture affect the thickness of the first anionic layer 30. For instance, the higher the concentration of first layer layerable materials 15 and the longer the exposure time, the thicker the first anionic layer 30 produced by the multilayer thin film coating method.

In embodiments as further shown in Figure 1, after formation of first anionic layer 30, the multilayer thin film coating method includes removing elastomeric substrate 5 with the produced first cationic layer 25 and first anionic layer 30 from the anionic mixture and then exposing elastomeric substrate 5 with first cationic layer 25 and first anionic layer 30 to cationic molecules in a cationic mixture to produce second cationic layer 35 on first anionic layer 30. The cationic mixture contains second layer cationic materials 75. In an embodiment, second layer cationic materials 75 are positively charged. In some embodiments, second layer cationic materials 75 comprise polyethylenimine. The cationic mixture includes an aqueous solution of second layer cationic materials 75. The aqueous solution may be prepared by any suitable method. In embodiments, the aqueous solution includes second layer cationic materials 75 and water. In other embodiments, second layer cationic materials 75 may be dissolved in a mixed solvent, in which one of the solvents is water and the other solvent is miscible with water (e.g., water, methanol, and the like). The solution may also contain colloidal particles in combination with polymers or alone, if positively charged. Any suitable water may be used. In embodiments, the water is deionized water. In some embodiments, the aqueous solution may include from about 0.05 wt.% second layer cationic materials 75 to about 1.50 wt.% second layer cationic materials 75, alternatively from about 0.01 wt.% second layer cationic materials 75 to about 2.00 wt.% second layer cationic materials 75, and further alternatively from about 0.001 wt.% second layer cationic materials 75 to about 20.0 wt.% second layer cationic materials 75. In embodiments, elastomeric substrate 5 with first cationic layer 25 and first anionic layer 30 may be exposed to the cationic mixture for any suitable period of time to produce second cationic layer 35. In embodiments, elastomeric substrate 5 with first cationic layer 25 and first anionic layer 30 is exposed to the cationic mixture from about 1 second to about 20 minutes, alternatively from about 1 second to about 200 seconds, and alternatively from about 10 seconds to about 200 seconds, and further alternatively from about instantaneous to about 1,200 seconds, and alternatively from about 1 second to about 5 seconds, and alternatively from about 4 seconds to about 6 seconds, and further alternatively about 5 seconds. In an embodiment, elastomeric substrate 5 with first cationic layer 25 and first anionic layer 30 is exposed to the cationic mixture from about 4 seconds to about 6 seconds.

In embodiments, after formation of the second cationic layer 35, the multilayer thin film coating method includes removing elastomeric substrate 5 with the produced first cationic layer 25, first anionic layer 30, and second cationic layer 35 from the cationic mixture and then exposing elastomeric substrate 5 with first cationic layer 25, first anionic layer 30, and second cationic layer 35 to anionic molecules in an anionic mixture to produce second anionic layer 40 on second cationic layer 35. The anionic mixture contains second layer layerable materials 70. Without limitation, the positive second cationic layer 35 attracts the anionic molecules to form the cationic-anionic pair of second cationic layer 35 and second anionic layer 40. The anionic mixture includes an aqueous solution of second layer layerable materials 70. In an embodiment, second layer layerable materials 70 comprise clay. Embodiments include the clay comprising sodium montmorillonite. The aqueous solution may be prepared by any suitable method. In embodiments, the aqueous solution includes second layer layerable materials 70 and water. Second layer layerable materials 70 may also be dissolved in a mixed solvent, in which one of the solvents is water and the other solvent is miscible with water (e.g., ethanol, methanol, and the like). Combinations of anionic polymers and colloidal particles may be present in the aqueous solution. Any suitable water may be used. In embodiments, the water is deionized water. In some embodiments, the aqueous solution may include from about 0.05 wt.% second layer layerable materials 70 to about 1.50 wt.% second layer layerable materials 70, alternatively from about 0.01 wt.% second layer layerable materials 70 to about 2.00 wt.% second layer layerable materials 70, and further alternatively from about 0.001 wt.% second layer layerable materials 70 to about 20.0 wt.% second layer layerable materials 70. In embodiments, elastomeric substrate 5 with first cationic layer 25, first anionic layer 30, and second cationic layer 35 may be exposed to the anionic mixture for any suitable period of time to produce second anionic layer 40. In embodiments, elastomeric substrate 5 with first cationic layer 25, first anionic layer 30, and second cationic layer 35 is exposed to the anionic mixture from about 1 second to about 20 minutes, alternatively from about 1 second to about 200 seconds, and alternatively from about 10 seconds to about 200 seconds, and further alternatively from about instantaneous to about 1,200 seconds, and alternatively from about 1 second to about 5 seconds, and alternatively from about 4 seconds to about 6 seconds, and further alternatively about 5 seconds. In an embodiment, elastomeric substrate 5 with first cationic layer 25, first anionic layer 30, and second cationic layer 35 is exposed to the anionic mixture from about 4 seconds to about 6 seconds. Quadlayer 10 is therefore produced on elastomeric substrate 5. In embodiments as shown in Figure 1 in which elastomeric substrate 5 has one quadlayer 10, coating 65 comprises quadlayer 10. In embodiments, quadlayer 10 comprises first cationic layer 25, first anionic layer 30, second cationic layer 35, and second anionic layer 40.

In an embodiment as shown in Figure 2, coating 65 also comprises primer layer 45. Primer layer 45 is disposed between elastomeric substrate 5 and first cationic layer 25 of quadlayer 10. Primer layer 45 may have any number of layers. In embodiments, the layer of primer layer 45 proximate to elastomeric substrate 5 has a charge with an attraction to elastomeric substrate 5, and the layer of primer layer 45 proximate to first cationic layer 25 has a charge with an attraction to first cationic layer 25. In embodiments as shown in Figure 2, primer layer 45 is a bilayer having a first primer layer 80 and a second primer layer 85. In such embodiments, first primer layer 80 is a cationic layer (or alternatively neutral) comprising first primer layer materials 60, and second primer layer 85 is an anionic layer (or alternatively neutral) comprising second primer layer materials 90. First primer layer materials 60 comprise cationic materials. In an embodiment, first primer layer materials 60 comprise polyethylenimine. Second primer layer materials 90 comprise layerable materials. In an embodiment, second primer layer materials 90 comprise polyacrylic acid. In other embodiments (not shown), primer layer 45 has more than one bilayer. In an embodiment, the multilayer thin film coating method provides a coating 65 with primer layer 45 comprising polyethylenimine, first cationic layer 25 comprising polyethylene oxide, first anionic layer 30 comprising polyacrylic acid, second cationic layer 35 comprising polyethylenimine, and second anionic layer 40 comprising clay (e.g., vermiculite).

In such embodiments shown in Figure 2, first primer layer materials 60 may comprise any suitable cationic materials. In some embodiments, first primer layer materials 60 include one or more materials that are neutral. The cationic materials comprise polymers, colloidal particles, nanoparticles, salts, or any combinations thereof. The polymers include cationic polymers, polymers with hydrogen bonding, or any combinations thereof. Without limitation, examples of suitable cationic polymers include branched polyethylenimine, linear polyethylenimine, cationic polyacrylamide, cationic poly diallyldimethylammonium chloride, poly(allyl amine), poly(allyl amine) hydrochloride, poly(vinyl amine), poly(acrylamide-co-diallyldimethylammonium chloride), or any combinations thereof. In an embodiment, first primer layer materials 60 comprise polyethylenimine. Without limitation, examples of suitable polymers with hydrogen bonding include polyethylene oxide, polyglycidol, polypropylene oxide, poly(vinyl methyl ether), polyvinyl alcohol, polyvinylpyrrolidone, polyallylamine, branched polyethylenimine, linear polyethylenimine, poly(acrylic acid), poly(methacrylic acid), copolymers thereof, or any combinations thereof. In an embodiment, a cationic material includes polyethylene oxide, polyglycidol, or any combinations thereof. In some embodiments, the cationic material is polyethylene oxide. In an embodiments, the cationic material is polyglycidol. In embodiments, the polymers with hydrogen bonding are neutral polymers. In addition, without limitation, colloidal particles include organic and/or inorganic materials. Further, without limitation, examples of colloidal particles include clays, layered double hydroxides, inorganic hydroxides, silicon based polymers, polyoligomeric silsesquioxane, carbon nanotubes, graphene, or any combinations thereof. Without limitation, examples of suitable layered double hydroxides include hydrotalcite, magnesium LDH, aluminum LDH, or any combinations thereof. The salts may include any salts suitable for use with the multilayer thin film coating method. In an embodiment, the salts include salts from the Hofmeister series of cations. In embodiments, the salts include salts from the ions NH4 +, K⁺, Na⁺, Li⁺, Mg²⁺, Ca²⁺, Rb⁺, Cs⁺, N(CH₃)₄⁺, or any combinations thereof. In embodiments, the salts include salts from the ions K⁺, Na⁺, or any combinations thereof. In an embodiment, the salts include salts from the ion K⁺. In other embodiments, the salts include salts from the ion Na⁺. Embodiments include the salt comprising NaCl, KCl, or any combinations thereof. In some embodiments, the salt comprises NaCl. In other embodiments, the salt comprises KCl. The salts are of a concentration from about 1 millimolar in solution to about 10 millimolar in solution, alternatively from about 5 millimolar in solution to about 10 millimolar in solution, and alternatively from about 1 millimolar in solution to about 100 millimolar in solution.

Embodiments shown in Figure 2 also include second primer layer materials 90 comprising any suitable layerable materials. In some embodiment, second primer layer materials 90 are neutral and provide a layer that has a neutral charge. In embodiments, one or more layers are neutral. The layerable materials include anionic polymers, colloidal particles, salts, or any combinations thereof. Without limitation, examples of suitable anionic polymers include polystyrene sulfonate, polymethacrylic acid, polyacrylic acid, poly(acrylic acid, sodium salt), polyanetholesulfonic acid sodium salt, poly(vinylsulfonic acid, sodium salt), or any combinations thereof. In addition, without limitation, colloidal particles include organic and/or inorganic materials. Further, without limitation, examples of colloidal particles include clays, colloidal silica, inorganic hydroxides, silicon based polymers, polyoligomeric silsesquioxane, carbon nanotubes, graphene, or any combinations thereof. Any type of clay suitable for use in an anionic solution may be used. Without limitation, examples of suitable clays include sodium montmorillonite, hectorite, saponite, Wyoming bentonite, vermiculite, halloysite, or any combinations thereof In an embodiment, the clay is Vermiculite. In some embodiments, the day is sodium montmorilionite. Any inorganic hydroxide thai may provide retardancy to gas or vapor transmission may be used. In an embodiment, the inorganic hydroxide includes aluminum hydroxide, magnesium hydroxide, or any combinations thereof. The salts may include any salts suitable for use with the multilayer thin film coating method. In an embodiment the salts include salts from the Hofmelsier series of anions. In embodiments, the salts include salts from the ions CO₃², F, SO₄²⁻, H₂PO₄²⁻, C₂H₃O₂⁻, Cl⁻, NO₃⁻, Br⁻, Cl0₃⁻, I⁻, ClO₄⁻, SCN⁻, S₂O₃²⁻, or any combinations thereof. In an embodiment, the salt includes the ion Cl⁻. The salts are of a concentration from about 1 millimolar in solution to about 10 millimolar in solution, alternatively from about 5 millimolar in solution to about 10 millimolar in solution, alternatively from about 1 millimolar in solution to about 100 millimolar in solution, and further alternatively from about 0.1 millimolar in solution to about 100 millimolar in solution.

In further embodiments as shown in Figure 2, the multilayer thin film coating method includes exposing elastomerie substrate 5 to cationic molecules in a cationic mixture to produce first primer layer 80 on elastomeric substrate 5. The cationic mixture contains first primer layer materials 60. In an embodiment, first primer layer materials 60 are positively charged and/or neutral.

In embodiments, the cationic mixture includes an aqueous solution of first primer layer materials 60. The aqueous solution may be prepared by any suitable method. In embodiments, the aqueous solution includes first primer layer materials 60 and water. In other embodiments, first primer layer materials 60 may be dissolved in a mixed solvent, in which one of the solvents is water and the other solvent is miscible with water (e.g., water, methanol), and the like). The sohition may also contain colloidal panicles in combination with polymers or alone, if positively charged. Any suitable water may be used, In embodiments, the water is deionized water. In some embodiments, the aqueous solution may include from about 0.1 wt.% first primer layer materials 60 to about 1.0 wt.% first primer layer materials 60, and alternatively may include from about. 0.05 wt.% first primer layer materials 60 to about 1.50 wt.% first primer layer materials 60, alternatively from about 0.01 wt.% first primer layer materials 60 to about 2.00 wt.% first primer layer materials 60, and further alternatively from about 0,001 wt.% first primer layer materials 60 to about 20.0 wt.% first primer layer materials 60. In an embodiments, the aqueous solution may include from about 0.1 wt.% first primer layer materials 60 to about 1.0 wt% first primer layer materials 60. In embodiments, elastomeric substrate 5 may be exposed to the cationic mixture for any suitable period of time to produce first primer layer 80, In embodiments, elastomeric substrate 5 is exposed to the cationic mixture from about 1 second to about 20 minutes, alternatively from about 1 second to about 200 seconds, and alternatively from about 10 seconds to about 200 seconds, and further alternatively from about instantaneous to about 1,200 seconds, and alternatively from about 1 second to about 5 seconds, and alternatively from about 4 seconds to about. 6 seconds, and further alternatively about 5 seconds, In an embodiment, elastomeric substrate 5 is exposed to the cationic mixture from about 4 seconds to about 6 seconds.

In embodiments as shown in Figure 2. after formation of first primer layer 80, the multilayer thin film coating method includes removing elastomeric substrate 5 with the produced first primer layer 80 from the cationic mixture and then exposing elastomeric substrate 5 with first primer layer 80 to anionic molecules in an anionic mixture to produce second primer layer 85 on first primer layer 80. The anionic mixture contains second primer layer materials 90. The anionic mixture includes an aqueous solution of second primer layer materials 90. The aqueous solution may he prepared by any suitable method. In embodiments, the aqueous solution includes second primer layer materials 90 and water. Second primer layer materials 90 may also be dissolved in a mixed solvent, in which one of the solvents is water and the other solvent is miscible with water (e.g., ethanol, methanol, and the like). Combinations of anionic polymers and colloidal particles may be present in the aqueous solution, Any suitable water may be used. In embodiments, the water is deionized water. In some embodiments, the aqueous solution may include from about 0.1 wt.% second primer layer materials 90 to about 1.0 wt.% second primer layer materials 90, and alternatively the aqueous solution may include from about 0.05 wt% second primer layer materials 90 to about 150 wt.% second primer layer materials 90, alternatively from about 0.01 wt.% second primer layer materials 90 to about 2.00 wt.% second primer layer materials 90, and further alternatively from about 0.001 wt.% second primer layer materials 90 to about 20,0 wt.% second primer layer materials 90. In embodiments, the elastomeric substrate 5 with first primer layer 80 may be exposed to the anionic mixture for any suitable period of time to produce second primer layer 85. In embodiments, elastomeric substrate 5 with first primer layer 80 is exposed to the anionic mixture from about 1 second to about 20 minutes, alternatively from about 1 second to about 200 seconds, and alternatively from about 10 seconds to about 200 seconds, and further alternatively from about instantaneous to about 1,200 seconds, and alternatively from about 1 second to about 5 seconds, and alternatively from about 4 seconds to about 6 seconds, and further alternatively about 5 seconds. In an embodiment, elastomeric substrate 5 is exposed to the anionic mixture from about 4 seconds to about 6 seconds. Elastomeric substrate 5 with primer layer 45 is then removed from the anionic mixture and then the multilayer thin film coating method proceeds to produce quadlayer 10.

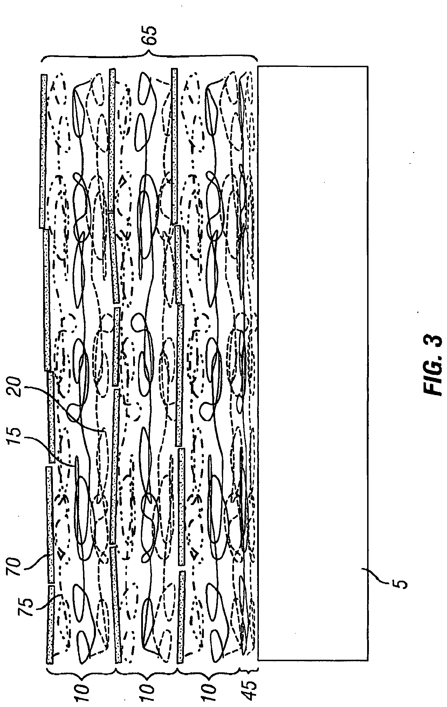

In embodiments as shown in Figure 3, the exposure steps are repeated with substrate 5 having quadlayer 10 continuously exposed to the cationic mixture and then the anionic mixture to produce a coating 65 having multiple quadlayers 10. The repeated exposure to cationic mixtures and then anionic mixtures may continue until the desired number of quadlayers 10 is produced. Coating 65 may have any sufficient number of quadlayers 10 to provide elastomeric substrate 5 with a desired retardant to gas or vapor transmission. In an embodiment, coating 65 has between about 1 quadlayer 10 and about 40 quadlayers 10, alternatively between about 1 quadlayer 10 and about 1,000 quadlayers 10.

Embodiments include the multilayer thin film coating method providing a coated elastomeric substrate 5 having a gas transmission rate between about 0.005 cc/(m²*day*atm) and about 5,000 cc/(m²*day*atm), alternatively between about 0.005 cc/(m²*day*atm) and about 1,000 cc/(m²*day*atm), and alternatively between about 0.03 cc/(m²*day*atm) and about 100 cc/(m²*day*atm), further alternatively between about 0.3 cc/(m²*day*atm) and about 100 cc/(m²*day*atm), and further alternatively between about 3 cc/(m²*day*atm) and about 30 cc/(m²*day*atm).

It is to be understood that the multilayer thin film coating method is not limited to exposure to a cationic mixture followed by an anionic mixture. In embodiments in which elastomeric substrate 5 is positively charged or neutral, the multilayer thin film coating method includes exposing elastomeric substrate 5 to the anionic mixture followed by exposure to the cationic mixture. In such embodiment (not illustrated), first anionic layer 30 is deposited on elastomeric substrate 5 with first cationic layer 25 deposited on first anionic layer 30, and second anionic layer 40 is deposited on first cationic layer 25 followed by second cationic layer 35 deposited on second anionic layer 40 to produce quadlayer 10. with the steps repeated until coating 65 has the desired thickness. In embodiments in which elastomeric substrate 5 has a neutral charge, the multilayer thin film coating method may include beginning with exposure to the cationic mixture followed by exposure to the anionic mixture or may include beginning with exposure to the anionic mixture followed by exposure to the cationic mixture.

In embodiments (not shown), quadlayers 10 may have one or more than one cationic layer (i.e., first cationic layer 25, second cationic layer 35, cationic layers in primer layer 45) comprised of more than one type of cationic materials. In an embodiment (not shown), quadlayers 10 may have one or more than one anionic layer (i.e., first anionic layer 30, second anionic layer 40, anionic layers in primer layer 45) comprised of more than one type of anionic material. In some embodiments, one or more cationic layers are comprised of the same materials, and/or one or more of the anionic layers are comprised of the same anionic materials. It is to be understood that coating 65 is not limited to one layerable material but may include more than one layerable material and/or more than one cationic material.

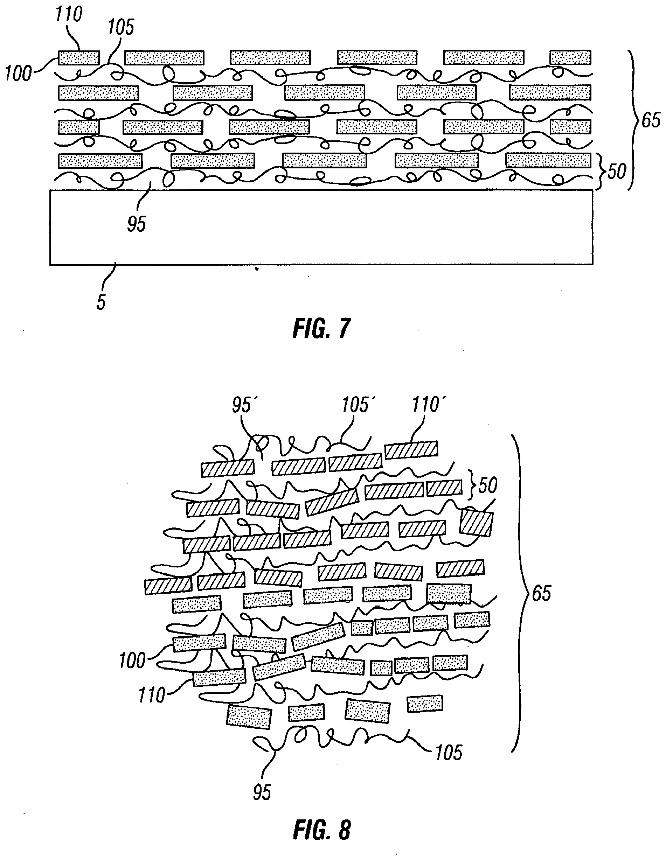

Figure 7 illustrates an embodiment of elastomeric substrate 5 with coating 65 of multiple bilayers 50. It is to be understood that the multilayer thin film coating method produces the coated elastomeric substrate 5 by the embodiments set forth above and shown in Figures 1-3. As shown in Figure 7, each bilayer 50 has cationic layer 95 and anionic layer 100. In embodiments as shown, cationic layer 95 has cationic materials 105, and anionic layer 100 has layerable materials 110. In the embodiment as shown, the multilayer thin film coating method produces coating 65 by exposure to a cationic mixture followed by an anionic mixture according to the embodiments above.

It is to be understood that the multilayer thin film coating method for preparing an elastomeric substrate 5 with coating 65 having bilayers 50 is not limited to exposure to a cationic mixture followed by an anionic mixture. In embodiments in which elastomeric substrate 5 is positively charged, the multilayer thin film coating method includes exposing elastomeric substrate 5 to the anionic mixture followed by exposure to the cationic mixture. In such embodiment (not illustrated), anionic layer 100 is deposited on elastomeric substrate 5 with cationic layer 95 deposited on anionic layer 100 to produce bilayer 50 with the steps repeated until coating 65 has the desired thickness. In embodiments in which elastomeric substrate 5 has a neutral charge, the multilayer thin film coating method may include beginning with exposure to the cationic mixture followed by exposure to the anionic mixture or may include beginning with exposure to the anionic mixture followed by exposure to the cationic mixture.

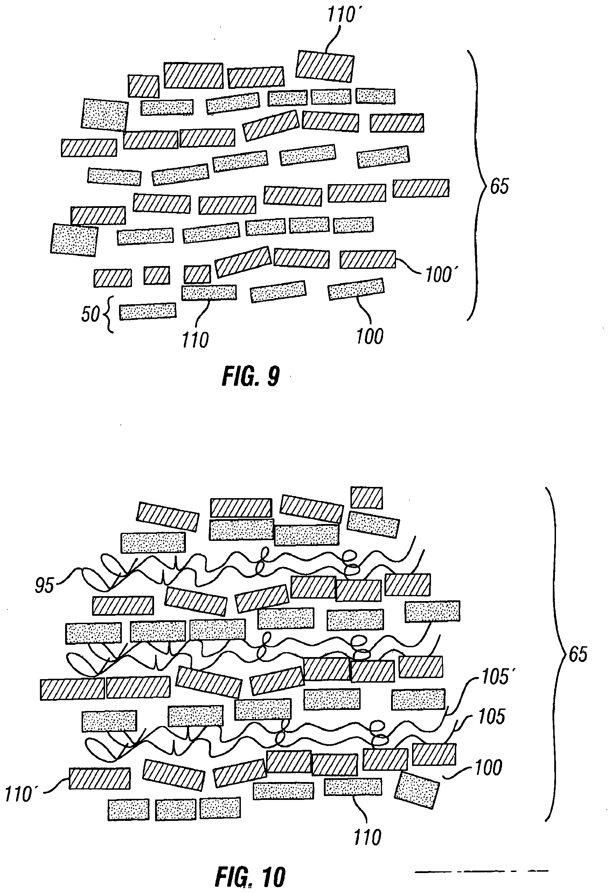

It is to be further understood that coating 65 is not limited to one layerable material 110 and/or one cationic material 105 but may include more than one layerable material 110 and/or more than one cationic material 105. The different layerable materials 110 may be disposed on the same anionic layer 100, alternating anionic layers 100, or in layers of bilayers 50 (i.e., or in layers of trilayers or increasing numbers of layers). The different cationic materials 105 may be disposed on the same cationic layer 95, alternating cationic layers 95, or in layers of bilayers 50 (i.e., or in layers of trilayers or increasing numbers of layers). For instance, in embodiments as illustrated in Figures 8-10, coating 65 includes two types of layerable materials 110, 110' (i.e., sodium montmorillonite is layerable material 110 and aluminum hydroxide is layerable material 110'). It is to be understood that elastomeric substrate 5 is not shown for illustrative purposes only in Figures 8-10. Figure 8 illustrates an embodiment in which layerable materials 110, 110' are in different layers of bilayers 50. For instance, as shown in Figure 8, layerable materials 110' are deposited in the top bilayers 50 after layerable materials 110 are deposited on elastomeric substrate 5 (not illustrated). Figure 9 illustrates an embodiment in which coating 65 has layerable materials 110, 110' in alternating bilayers 50. It is to be understood that cationic materials 105 are not shown for illustrative purposes only in Figure 9. Figure 10 illustrates an embodiment in which there are two types of bilayers 50, comprised of particles (layerable materials 110, 110') and cationic materials 105, 105' (e.g., polymers).

Figures 7-10 do not show coating 65 having primer layer 45. It is to be understood that embodiments of coating 65 having bilayers 50 also may have primer layer 45. Embodiments (not illustrated) of coating 65 having trilayers, pentalayers, and the like may also have primer layer 45.

It is to be understood that the multilayer thin film coating method produces coatings 65 of trilayers, pentalayers, and increasing numbers of layers by the embodiments disclosed above for bilayers 50 and quadlayers 10. It is to be understood that coating 65 is not limited to only a plurality of bilayers 50, trilayers, quadlayers 10, pentalayers, hexalayers, heptalayers, octalayers, or increasing numbers of layers. In embodiments, coating 65 may have any combination of such layers.

In some embodiments in which coating 65 comprises trilayers, the trilayers comprise a first cationic layer comprising polyethylenimine, a second layer comprising polyethylene oxide or polyglycidol, and an anionic layer comprising clay. In such an embodiment, the second layer is disposed between the first cationic layer and the anionic layer. In another embodiment in which coating 65 comprises trilayers, the trilayers comprise a first cationic layer comprising polyethylenimine, an anionic layer comprising clay, and a second layer comprising polyethylene oxide or polyglycidol. In such an embodiment, the anionic layer is disposed between the first cationic layer and the second layer. In some embodiments in which coating 65 comprises trilayers, the trilayers comprise a layer (i) comprising polyethylene oxide or polyglycidol, a first anionic layer comprising polyacrylic acid or polymethacrylic acid, and a second anionic layer comprising sodium montmorillonite. In such an embodiment, the first anionic layer is disposed between the layer (i) and the second anionic layer.

In some embodiments, the multilayer thin film coating method includes rinsing elastomeric substrate 5 between each (or alternatively more than one) exposure step (i.e., after the step of exposing to a cationic mixture or step of exposing to an anionic mixture). For instance, after elastomeric substrate 5 is removed from exposure to the cationic mixture, elastomeric substrate 5 with first cationic layer 25 is rinsed and then exposed to an anionic mixture. In some embodiments, quadlayer 10 is rinsed before exposure to the same or another cationic and/or anionic mixture. In an embodiment, coating 65 is rinsed. The rinsing is accomplished by any rinsing liquid suitable for removing all or a portion of ionic liquid from elastomeric substrate 5 and any layer. In embodiments, the rinsing liquid includes deionized water, methanol, or any combinations thereof. In an embodiment, the rinsing liquid is deionized water. A layer may be rinsed for any suitable period of time to remove all or a portion of the ionic liquid. In an embodiment, a layer is rinsed for a period of time from about 5 seconds to about 5 minutes. In some embodiments, a layer is rinsed after a portion of the exposure steps.

In an embodiment, the multilayer thin film coating method includes rinsing elastomeric substrate 5 having coating 65 with a salt solution after a desired exposure step (i.e., after the step of exposure to a cationic mixture or an anionic mixture). For instance, after coating 65 is formed on elastomeric substrate 5, elastomeric substrate 5 having coating 65 is rinsed in the salt solution. Rinsing with the salt solution may be before and/or after rinsing with the rinsing liquid (i.e., deionized water). In an embodiment, elastomeric substrate 5 having coating 65 is rinsed with the salt solution before rinsing with the rinsing liquid. The salts may include any salts suitable for use with the multilayer thin film coating method. In an embodiment in which the outer layer of coating 65 is negative (i.e., the anionic layer, second anionic layer, third anionic layer, etc., which depends upon whether coating 65 is a bilayer, trilayer, quadlayer, etc.), the salts include salts from the Hofmeister series of anions. In embodiments, the salts include salts from the ions CO₃²⁻, F⁻, SO₄²⁻, H₂PO₄²⁻, C₂H₃O₂⁻, Cl⁻, NO₃⁻, Br⁻, Cl0₃⁻, I⁻, ClO₄⁻, SCN⁻, S₂O₃²⁻, or any combinations thereof. In an embodiment, the salt includes the ion Cl⁻. The salts are of a concentration from about 1 millimolar in solution to about 10 millimolar in solution, alternatively from about 5 millimolar in solution to about 10 millimolar in solution, alternatively from about 1 millimolar in solution to about 100 millimolar in solution, and further alternatively from about 0.1 millimolar in solution to about 100 millimolar in solution. In an embodiment in which the outer layer of coating 65 is positive (i.e., the cationic layer, second cationic layer, third cationic layer, etc., which depends upon whether coating 65 is a bilayer, trilayer, quadlayer, etc.), the salts include salts from the Hofmeister series of cations. In embodiments, the salts include salts from the ions NH₄⁺, K⁺, Na⁺, Li⁺, Mg²⁺, Ca²⁺, Rb⁺, Cs⁺, N(CH₃)₄⁺, or any combinations thereof. In embodiments, the salts include salts from the ions K⁺, Na⁺, or any combinations thereof. In an embodiment the salts include salts from the ion K⁺. In other embodiment, the salts include salts from the ion Na⁺. Embodiments include the salt comprising NaCl, KCl, or any combinations thereof. In some embodiments, the salt comprises NaCl. In other embodiments, the salt comprises KCl. The salts are of a concentration from about 1 millimolar in solution to about 10 millimolar in solution, alternatively from about 5 millimolar in solution to about 10 millimolar in solution, and alternatively from about 1 millimolar in solution to about 100 millimolar in solution. In alternative embodiments, the multilayer thin film coating method includes rinsing one or more layers with a salt solution during the deposition process of producing coating 65. In some alternative embodiments, rinsing one or more of the layers with a salt solution is accomplished with the same or different salt solutions.

In embodiments, the multilayer thin film coating method includes drying elastomeric substrate 5 between each (or alternatively more than one) exposure step (i.e., step of exposing to cationic mixture or step of exposing to anionic mixture). For instance, after elastomeric substrate 5 is removed from exposure to the cationic mixture, elastomeric substrate 5 with first cationic layer 25 is dried and then exposed to an anionic mixture. In some embodiments, quadlayer 10 is dried before exposure to the same or another cationic and/or anionic mixture. In an embodiment, coating 65 is dried. The drying is accomplished by applying a drying gas to elastomeric substrate 5. The drying gas may include any gas suitable for removing all or a portion of liquid from elastomeric substrate 5. In embodiments, the drying gas includes air, nitrogen, or any combinations thereof. In an embodiment, the drying gas is air. In some embodiments, the air is filtered air. The drying may be accomplished for any suitable period of time to remove all or a portion of the liquid from a layer (i.e., quadlayer 10) and/or coating 65. In an embodiment, the drying is for a period of time from about 5 seconds to about 500 seconds. In an embodiment in which the multilayer thin film coating method includes rinsing after an exposure step, the layer is dried after rinsing and before exposure to the next exposure step. In alternative embodiments, drying includes applying a heat source to the layer (i.e., quadlayer 10) and/or coating 65. For instance, in an embodiment, elastomeric substrate 5 is disposed in an oven for a time sufficient to remove all or a portion of the liquid from a layer. In some embodiments, drying is not performed until all layers have been deposited, as a final step before use.

In some embodiments (not illustrated), the thin film coating method includes coating 65 comprising additives. In embodiments, the additives may be mixed in anionic mixtures with layerable materials. For instance, the thin film coating method includes mixing the additives with the layerable materials in the aqueous solution, includes mixing the additives with the cationic materials in the aqueous solution, or any combinations thereof. In some embodiments, coating 65 has a layer or layers of additives. The additives may be used for any desirable purpose. For instance, additives may be used for protection of elastomeric substrate 5 against ultraviolet light or for abrasion resistance. For ultraviolet light protection, any negatively charged material suitable for protection against ultraviolet light and for use in coating 65 may be used. In an embodiment, examples of suitable additives for ultraviolet protection include titanium dioxide, clay, or any combinations thereof. In embodiments, the additive is titanium dioxide. Any clay suitable for ultraviolet protection may be used. In an embodiment, the clay is vermiculite. For abrasion resistance, any additive suitable for abrasion resistance and for use in coating 65 may be used. In embodiments, examples of suitable additives for abrasion resistance include crosslinkers. Any crosslinker suitable for with an elastomer may be used, In an embodiment, the crosslinker may be any chemical that reacts with any matter in coating 65. Without limitation, examples of crosslinkers include bromoalkanes, aldehydes, carbodiimides, amine active esters, or any combinations thereof. In embodiments, the aldehydes include glutaraldehyde, di-aldehyde, or any combinations thereof. In an embodiment, the aldehydes include glutaraldehyde. In an embodiment, the carbodiimide is 1-ethyl-3-(3-dimethylaminopropyl)carbodiimide (EDC). Embodiments include the amine reactive esters including N-hydroxysuccinimide esters, imidoesters, or any combinations thereof. The crosslinkers may be used to crosslink the anionic layers and/or cationic layers (i.e., to one another or to themselves). In some embodiments, the additives are added in a separate exposure (i.e., separate bath, spray, or the like) from the exposure that provided coating 65.

In some embodiments, the pH of the anionic and/or cationic solution is adjusted. Without being limited by theory, reducing the pH of the cationic solution reduces growth of coating 65. Further, without being limited by theory, the coating 65 growth may be reduced because the cationic solution may have a high charge density at lowered pH values, which may cause the polymer backbone to repel itself into a flattened state. In some embodiments, the pH is increased to increase the coating 65 growth and produce a thicker coating 65. Without being limited by theory, a lower charge density in the cationic mixture provides an increased coiled polymer. The pH may be adjusted by any suitable means such as by adding an acid or base. In an embodiment, the pH of an anionic solution is between about 0 and about 14, alternatively between about 1 and about 7, and alternatively between about 1 and about 3, and further alternatively about 3. Embodiments include the pH of a cationic solution that is between about 0 and about 14, alternatively between about 3 and about 12, and alternatively about 3.

The exposure steps in the anionic and cationic mixtures may occur at any suitable temperature. In an embodiment, the exposure steps occur at ambient temperatures.

In some embodiments, coating 65 is optically transparent.

In an embodiment, elatomeric substrates 5 may comprise a portion or all of the rubber portions of a tire. In such an embodiment, coating 65 may provide a barrier that limits gas (i.e., oxygen), vapor, and/or chemicals to pass through the tire. Elastomeric substrates 5 with coating 65 may be used for any suitable portions of a tire such as, without limitation, the carcass, the innerliner, and the like. In an embodiment, the carcass of a tire comprises elastomeric substrate 5 with coating 65.

To further illustrate various illustrative embodiments of the present invention, the following examples are provided.

### EXAMPLE 1

**Materials.** Natural sodium montmorillonite (MMT)(CLOISITE® NA+, which is a registered trademark of Southern Clay Products, Inc.) clay was used as received. Individual MMT platelets had a negative surface charge in deionized water, reported density of 2.86 g/cm³, thickness of 1 nm, and a nominal aspect ratio (*ℓ*/*d*) ≥ 200. Branched polyethylenimine (PEI) (M_{w} = 25,000 g/mol and Mₙ = 10,000 g/mol) and polyacrylic acid (PAA) (35 wt.% in water. M_{w} = 100,000 g/mol) were purchased from Sigma-Aldrich (Milwaukee, WI) and used as received. Polyethylene oxide (PEO) (M_{w} = 4,000,000 g/mol) was purchased from Polysciences, Inc. (Warrington, PA). 500 µm thick, single-side-polished, silicon wafers were purchased from University Wafer (South Boston, MA) and used as reflective substrates for film growth characterization via ellipsometry.

**Film Preparation.** All film deposition mixtures were prepared using 18.2MΩ deionized water, from a DIRECT-Q® 5 Utrapure Water System, and rolled for one day (24 h) to achieve homogeneity. DIRECT-Q® is a registered trademark of Millipore Corporation. Prior to deposition, the pH of 0.1 wt. % aqueous solutions of PEI were altered to 10 or 3 using 1.0 M HCl, the pH of 0.1 wt. % aqueous solutions of PE0 were altered to 3 using 1.0 M HCl, the pH of 0.2 wt. % aqueous solutions of PAA were altered to 3 using 1.0 M HCl, and the pH of 2.0 wt. % aqueous suspensions of MMT were altered to 3 using 1.0 M HCl. Silicon wafers were piranha treated for 30 minutes prior to rinsing with water, acetone, water again and finally dried with filtered air prior to deposition. Elastomeric substrates were rinsed with deionized water, immersed in a 40 wt.% propanol in water bath at 40°C for 5 minutes, rinsed with RT 40 wt.% propanol in water, rinsed with deionized water, dried with filtered air, and plasma cleaned for 5 minutes on each side. Each appropriately treated substrate was then dipped into the PEI solution at pH 10 for 5 minutes, rinsed with deionized water, and dried with filtered air. The same procedure was followed when the substrate was next dipped into the PAA solution. Once this initial bilayer was deposited, the above procedure was repeated when the substrate was dipped into the PEO solution, then the PAA solution, then the PEI solution at pH 3, and finally the MMT suspension, using 5 second dip times for polymer solutions and using one minute dip times for the MMT suspension, until the desired number of quadlayers of PEO/PAA/PEI/MMT were achieved. All films were prepared using a home-built robotic dipping system.

**Film Characterization.** Film thickness was measured every one to five quadlayers (on silicon wafers) using an ALPHA-SE® ellipsometer. ALPHA-SE® is a registered trademark of J.A. Woollam Co., Inc. OTR testing was performed by Mocon, Inc. in accordance with ASTM D-3985, using an Oxtran 2/21 ML instrument at 0 % RH.

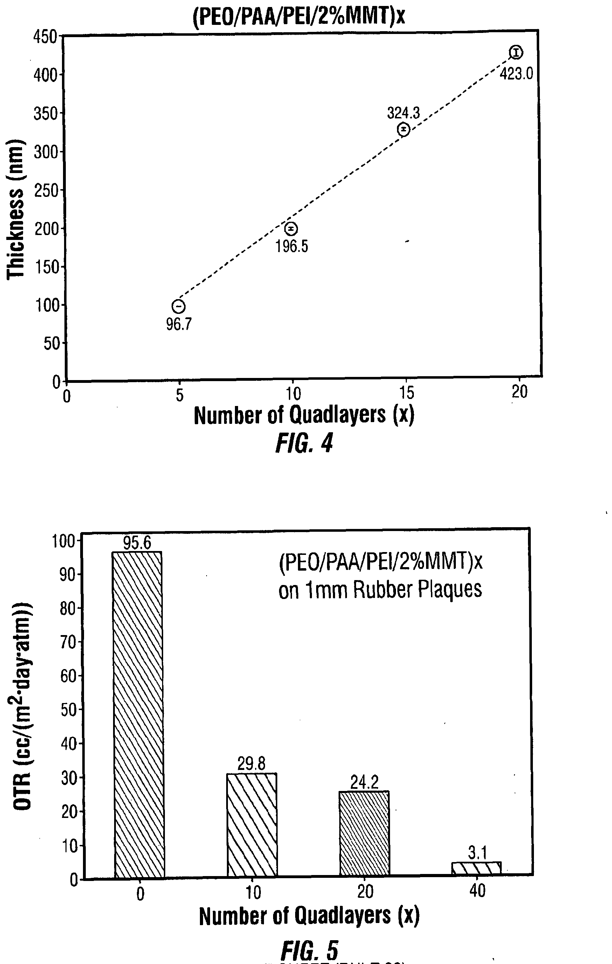

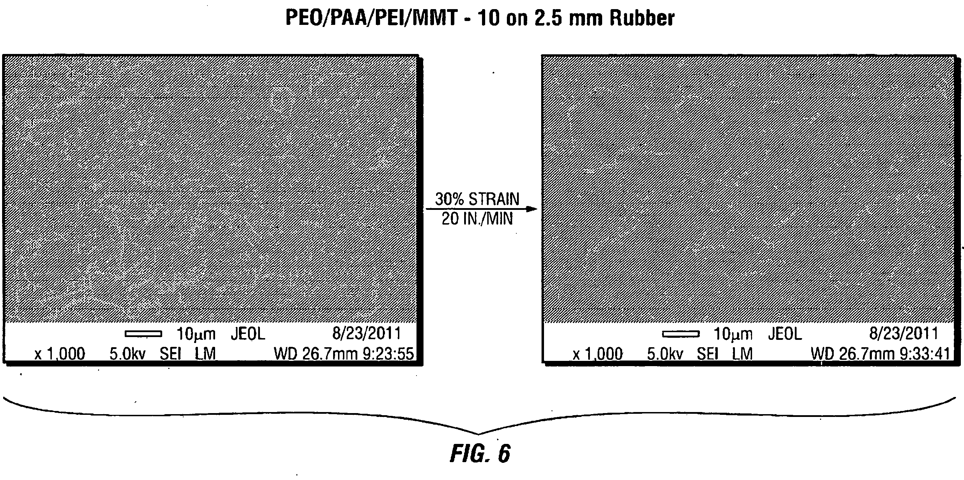

From the results, Figure 4 illustrates thickness as a function of the number of quadlayers PEO/PAA/PEI/MMT when deposited on a silicon wafer and measured via ellipsometry. Figure 5 illustrates results of oxygen transmission rate (OTR) as a function of the number of quadlayers of PEO/PAA/PEI/MMT when deposited on a 1 mm thick rubber plaque. Figure 6 illustrates the elasticity of a coating of which the image on the left is 10 QLs on rubber, and the image on the right is the same coating stretched at 20 inches per minute to 30% strain. This right image showed no sign of mud-cracking and revealed the conformality of the coating to the stretched rubber surface.

### EXAMPLE2

Cationic branched polyethylenimine (PEI) (Mw = 25,000 g/mol and Mn = 10,000 g/mol) and anionic poly(acrylic acid) (PAA) (Mw = 100,000 g/mol) were purchased from Sigma-Aldrich (Milwaukee, WI). Poly(ethylene oxide) (PEO) (Mw = 4,000,000 g/mol) was purchased from Polysciences, Inc. (Warrington, PA). The pH of aqueous solutions containing 0.1 wt. % PEI, 0.2 wt. % PAA, or 0.1 wt. % PEO was adjusted to 3 using 1 M HCl prior to film assembly. Southern Clay Products, Inc. (Gonzales, TX) supplied natural, untreated montmorillonite (MMT) (CLOISITE® NA+). This clay had a cationic exchange capacity of 0.926meq/g and was negatively-charged in deionized water. MMT platelets had a density of 2.86 g/cm3, diameter of 10∼1000nm and thickness of 1nm. A natural vermiculite (VMT) (MICROLITE® 963++) clay dispersion containing no clay particles greater than 45 microns was used. MICROLITE® is a registered trademark of W.R. Grace & Co.-Conn. The pH of the aqueous suspension containing 1 wt. % clay (either MMT or VMT) was also adjusted to 3 using a 1 M HCl prior to film assembly. Before deposition, mini-tire and certain butyl rubber plaques were treated using a BD-20C Corona Treater (Electro-Technic Products, Inc., Chicago), which created a negative surface charge, A 5 minute 1M HNO₃ treatment was also employed for certain butyl rubber plaques and then compared with other methods. Carcass rubber films were rinsed with deionized water, bathed in 40 wt.% N-Propanol (NP) at 40°C for 5 min, rinsed with NP and again with water before being dried with filtered air. Carcass rubber films rinsed only with deionized water were also prepared as references.

All films created for oxygen transmission rate testing were sent to Mocon, Inc. (Minneapolis, MN) and tested in accordance with ASTM D-3985,13 using an Oxtran 2/21 ML instrument. OTR testing was done at 40 °C and 0% RH, unless otherwise specified. Thickness of films was measured on silicon wafers using a Reflectometer (Filmetrics F20-UV). Thin film topography was imaged using a JEOL JSM-7500F FE-SEM.

Dip coatings on carcass rubber plaques were prepared using home-built robotic dipping systems. The surface of rubber plaques were cleaned by plasma using a Diener Electronic ATTO plasma system (purchased from Thierry Corporation, Detroit, MI) at 25 W for 5 minutes. The deposition time for PEI/PAA primer layer was 5 minutes, and the time was reduced to 1 minute for regular quadlayer deposition. Rinsing and drying were carried out between depositions. A spraying study was carried out on a modified spraying robot from Svaya Nanotechnologies. The spray deposition time for primer layer was 10 seconds, which was followed by a 5 seconds pause. The time was reduced to 3 seconds for regular quadlayer deposition, which was followed by a 3 seconds pause between layers. There was a 10 seconds rinse and a 5 seconds pause between depositions. No drying was applied until the end.

Dip coating of a mini-tire was performed using several buckets. The dipping time for a primer layer on the mini-tire was 5 minutes. The deposition time for all the other layers was set at 1 minute. The mini-tire was immediately rinsed with de-ionized water and dunked three times after each deposition, but not dried.

Layer-by-layer assembly of a stretchable gas barrier film that was comprised of quadlayers of polyethylene oxide (PEO), poly(acrylic acid) (PAA), branched polyethylenimine (PEI), and clay were deposited onto rubber to improve the gas barrier performance. To optimize the coating process and gas barrier property, effects of primer layer pH, clay type, propanol rinsing, water rinsing, and stretching on gas barrier were studied, with the results summarized in Table 1. Deposition of PEI/PAA primer layer ensured good adhesion between the coating and rubber plaque. Unstretched film was prepared with a pH 3 PEI primer that exhibited an almost unnoticeable increase in OTR relative to pH 10 (from 11.2 to 11.9), and the same may be observed for stretched samples (from 51.5 to 53.4). It was concluded that the pH of primer layer PEI solution may be set at pH 3 to reduce consumption of solution and simplify the coating process.

The effect of applying propanol rinsing before assembly was also studied, and it was found that removal of propanol rinsing not only simplified the coating process, but also improved the gas barrier (see Table 1). The optimal MMT solution concentration was determined to be, 1 % to prevent embrittlement of the coating due to excessive deposition of clay. The optimized recipe for a stretchy coating was PEO/PAA/PET/1%MMT QLs with a pH 3PET/PAA primer layer on rubber plaques without propanol rinsing.

**Table 1.**

| **Coating** | **Substrate** | **Conditions** | **OTR** | |
|---|---|---|---|---|
| | | | cc/100in^2. day | cc/m^2. day |
| ***Effect of primer layer*** | | | | |
| (PEI10/PAA3)[PEO3/PAA3/PEI3/1%MMT3] | 1 mm carcass | 40 °C & 0% RH | 11.2 | 173.6 |
| 10QL | | | | |
| (PEI3/PAA3)[PEO3/PAA3/PEI3/1%MMT3] | 1 mm carcass | 40°C & 0%RH | 11.9 | 184.45 |
| 10QL | | | | |
| (PEI10/PAA3)[PEO3/PAA3/PEI3/1%MMT3] | 1 mm carcass | 40 °C& 0%RH | 51.5 | 798.25 |
| 10QL (10% stretch) | | | | |
| (PEI3/PAA3)[PEO3/PAA3/PEI3/1%MMT3] | 1 mm carcass | 40 °C & 0%RH | 53.4 | 827.70 |
| 10QL (10% stretch) | | | | |
| | | | | |

| ***Effect of clay type*** | | | | |
|---|---|---|---|---|
| (PEI10/PAA3)[PEO3/PAA3/PEI3/2%MMT3] | 1 mm carcass | 40°C & 0%RH | 0.723 | 11.2 |
| 40QL | | | | |
| (PEI10/PAA3)[PEO3/PAA3/PEI3/2%VMT3] | 1 mm carcass | 40 °C & 0%RH | 3.11 | 48.21 |
| 40QL | | | | |
| (PEI/PAA3)[PEO3/PAA3/PEI3/1%MMT3] | 1 mm carcass | 40 °C & 0%RH | 11.9 | 184.45 |
| 10QL | | | | |
| (PEI3/PAA3)[PEO3/PAA3/PEI3/1%VMT3] | 1 mm carcass | 40°C & 0%RH | 19.2 | 297.60 |
| 10QL | | | | |
| | | | | |
| ***Effect of propanol rinsing before deposition*** | | | | |
| (PEI3/PAA3)[PEO3/PAA3/PEI3/1%MMT3] | 1mm carcass | 40 °C & 0%RH | 9.26 | 143.53 |
| 10QL with propanol | | | | |
| (PEI3/PAA3)[PEO3/PAA3/PEI3/1%MMT3] | 1mm carcass | 40 °C & 0%RH | 3.78 | 58.59 |
| 10QL Without propanol | | | | |
| | | | | |

| ***Effect of 24 hours tap water rinsing after deposition*** | | | | |
|---|---|---|---|---|
| (PEI3/PAA3)[PEO3/PAA3/PEI3/1%MMT3] | 1 mm carcass | 40 °C & 0%RH | 28.0 | 279.00 |
| 10QL (24 hours rinse) | | | | |
| | | | | |

| ***Effect of stretching*** | | | | |
|---|---|---|---|---|
| (PEI10/PAA3)[PEO3/PAA3/PEI3/1%MMT3] | 1 mm carcass | 40 °C & 0%RH | 515 | 798.25 |
| 10QL (10% stretch) | | | | |
| (PEI10/PAA3)[PEO3/PAA3/PEI3/2%MMT3] | 1 mm carcass | 40°C& 0%RH | 46.9 | 726.95 |
| 10QL (10% stretch) | | | | |
| (PEI3/PAA3)[PEO3/PAA3/PEI3/1%VMT3] | 1mm carcass | 40 °C& 0%RH | 53.0 | 821.50 |
| 10QL (10% stretch) | | | | |

## Claims

1. A method for producing a material diffusion barrier comprising a coating on an elastomeric substrate, comprising:
(A) exposing the elastomeric substrate to a cationic solution to produce a cationic layer on the elastomeric substrate, wherein the cationic solution comprises cationic materials comprising a polymer, a salt, or any combinations thereof; and
(B) exposing the cationic layer to an anionic solution to produce an anionic layer on the cationic layer, wherein the anionic solution comprises an anionic polymer, a colloidal particle, a second salt, or any combinations thereof; and wherein the coating comprises a bilayer comprising the cationic layer and the anionic layer.

2. The method of claim 1, wherein the salt comprises an ion comprising NH4⁺, K⁺, Na⁺, Li⁺, Mg²⁺, Ca²⁺, Rb⁺, Cs⁺, N(CH₃)₄⁺, or any combinations thereof.

3. The method of claim 1, wherein the second salt comprises an ion comprising CO₃²⁻, F⁻, SO₄²⁻, H₂PO₄²⁻, C₂H₃O₂⁻, Cl⁻, NO₃⁻, Br⁻, Cl0₃⁻, I⁻, CIO₄⁻, SCN⁻, S₂O₃²⁻, or any combinations thereof.

4. The method of claim 1, further comprising:
(C) exposing the anionic layer to a second cationic solution to produce a second cationic layer on the anionic layer, wherein the second cationic solution comprises the polymer, the salt, or any combinations thereof, and wherein the coating comprises a trilayer comprising the cationic layer, the anionic layer, and the second cationic layer.

5. The method of claim 4, further comprising:
(D) exposing the second cationic layer to a second anionic solution to produce a second anionic layer on the second cationic layer, wherein the second anionic solution comprises the anionic polymer, the colloidal particle, the second salt, or any combinations thereof, and wherein the coating comprises a quadlayer comprising the cationic layer, the anionic layer, the second cationic layer, and the second anionic layer.

6. The method of claim 1, further comprising depositing a primer layer on the elastomeric substrate, wherein the primer layer is disposed between the elastomeric substrate and the cationic layer.

7. A method for producing a material diffusion barrier comprising a coating on an elastomeric substrate, comprising:
(A) exposing the elastomeric substrate to an anionic solution to produce an anionic layer on the elastomeric substrate, wherein the anionic solution comprises an anionic polymer, a colloidal particle, a salt, or any combinations thereof; and
(B) exposing the anionic layer to a cationic solution to produce a cationic layer on the anionic layer, wherein the cationic solution comprises a polymer, a second salt, or any combinations thereof; and wherein the coating comprises a bilayer comprising the cationic layer and the anionic layer.

8. The method of claim 7, wherein the salt comprises an ion comprising CO₃²⁻, F⁻, SO₄²⁻, H₂PO₄²⁻, C₂H₃O₂⁻, Cl⁻, NO₃⁻, Br⁻, Cl0₃⁻, I⁻, ClO₄⁻, SCN⁻, S₂O₃²⁻, or any combinations thereof.

9. The method of claim 7, wherein the second salt comprises an ion comprising NH₄⁺, K⁺, Na⁺, Li⁺, M₆²⁺, Ca²⁺, Rb⁺, Cs⁺, N(CH₃)₄⁺, or any combinations thereof.

10. The method of claim 7, further comprising:
(C) exposing the cationic layer to a second anionic solution to produce a second anionic layer on the cationic layer, wherein the second anionic solution comprises the anionic polymer, the colloidal particle, the salt, or any combinations thereof, and wherein the coating comprises a trilayer comprising the cationic layer, the anionic layer, and the second anionic layer.

11. The method of claim 10, further comprising:
(D) exposing the second anionic layer to a second cationic solution to produce a second cationic layer on the second anionic layer, wherein the second cationic solution comprises the polymer, the second salt, or any combinations thereof, and wherein the coating comprises a quadlayer comprising the cationic layer, the anionic layer, the second cationic layer, and the second anionic layer.

12. The method of claim 7, further comprising depositing a primer layer on the elastomeric substrate, wherein the primer layer is disposed between the elastomeric substrate and the anionic layer.

## Patentansprüche

1. Verfahren zur Herstellung einer Materialdiffusionsbarriere mit einer Beschichtung auf einem elastomeren Substrat, mit den folgenden Schritten:
(A) das elastomere Substrat wird einer kationischen Lösung ausgesetzt, um eine kationische Schicht auf dem elastomeren Substrat zu erzeugen, wobei die kationische Lösung kationische Materialien umfasst, die ein Polymer, ein Salz oder beliebige Kombinationen davon umfassen; und
(B) die kationische Schicht wird einer anionischen Lösung ausgesetzt, um eine anionische Schicht auf der kationischen Schicht zu erzeugen, wobei die anionische Lösung ein anionisches Polymer, ein kolloidales Teilchen, ein zweites Salz oder beliebige Kombinationen davon umfasst; und wobei die Beschichtung eine Zweifachschicht aus der kationischen Schicht und der anionischen Schicht umfasst.

2. Verfahren nach Anspruch 1, wobei das Salz ein Ion umfasst, das NH₄⁺, K⁺, Na⁺, Li⁺, Mg²⁺, Ca²⁺, Rb⁺, Cs⁺, N(CH₃)₄⁺ oder beliebigen Kombinationen davon umfasst.

3. Verfahren nach Anspruch 1, wobei das zweite Salz ein Ion umfasst, das CO₃²⁻ , F⁻, SO₄²⁻ , H₂PO₄² , C₂H₃O₂⁻, Cl⁻, NO₃⁻, Br⁻, ClO₃⁻, I⁻, ClO₄⁻, SCN⁻, S₂O₃²⁻ oder beliebige Kombinationen davon umfasst.

4. Verfahren nach Anspruch 1, ferner mit dem folgenden Schritt:
(C) die anionische Schicht wird einer zweiten kationischen Lösung ausgesetzt, um eine zweite kationische Schicht auf der anionischen Schicht zu erzeugen, wobei die zweite kationische Lösung das Polymer, das Salz oder beliebige Kombinationen davon umfasst, und wobei die Beschichtung eine Dreifachschicht aus der kationischen Schicht, der anionischen Schicht und der zweiten kationischen Schicht umfasst.

5. Verfahren nach Anspruch 4, ferner mit dem folgenden Schritt:
(D) die zweite kationische Schicht wird einer zweiten anionischen Lösung ausgesetzt, um eine zweite anionische Schicht auf der zweiten kationischen Schicht zu erzeugen, wobei die zweite anionische Lösung das anionische Polymer, das kolloidale Teilchen, das zweite Salz oder beliebige Kombinationen davon umfasst, und wobei die Beschichtung eine Vierfachschicht aus der kationischen Schicht, der anionischen Schicht, der zweiten kationischen Schicht und der zweiten anionischen Schicht umfasst.

6. Verfahren nach Anspruch 1, ferner umfassend das Abscheiden einer Primerschicht auf dem elastomeren Substrat, wobei die Primerschicht zwischen dem elastomeren Substrat und der kationischen Schicht angeordnet ist.

7. Verfahren zur Herstellung einer Materialdiffusionsbarriere, die eine Beschichtung auf einem elastomeren Substrat umfasst, mit den folgenden Schritten:
(A) das elastomere Substrat wird einer anionischen Lösung ausgesetzt, um eine anionische Schicht auf dem elastomeren Substrat zu erzeugen, wobei die anionische Lösung ein anionisches Polymer, ein kolloidales Teilchen, ein Salz oder beliebige Kombinationen davon umfasst; und
(B) die anionische Schicht wird einer kationischen Lösung ausgesetzt, um eine kationische Schicht auf der anionischen Schicht zu erzeugen, wobei die kationische Lösung ein Polymer, ein zweites Salz oder beliebige Kombinationen davon umfasst; und wobei die Beschichtung eine Zweifachschicht aus der kationischen Schicht und der anionischen Schicht umfasst.

8. Verfahren nach Anspruch 7, wobei das Salz ein Ion umfasst, das CO₃²⁻, F⁻, SO₄²⁻, H₂PO₄²⁻, C₂H₃O₂⁻, Cl⁻, NO₃⁻, Br⁻, ClO₃⁻, I⁻, ClO₄⁻, SCN⁻, S₂O₃²⁻ oder beliebige Kombinationen davon umfasst.

9. Verfahren nach Anspruch 7, wobei das zweite Salz ein Ion umfasst, das NH₄⁺, K⁺, Na⁺, Li⁺, Mg²⁺, Ca²⁺, Rb⁺, Cs⁺, N(CH₃)₄⁺ oder beliebige Kombinationen davon umfasst.

10. Verfahren nach Anspruch 7, ferner mit dem folgenden Schritt:
(C) die kationische Schicht wird einer zweiten anionischen Lösung ausgesetzt, um eine zweite anionische Schicht auf der kationischen Schicht zu erzeugen, wobei die zweite anionische Lösung das anionische Polymer, das kolloidale Teilchen, das Salz oder beliebige Kombinationen davon umfasst, und wobei die Beschichtung eine Dreifachschicht aus der kationischen Schicht, der anionischen Schicht und der zweiten anionischen Schicht umfasst.

11. Verfahren nach Anspruch 10, ferner mit dem folgenden Schritt:
(D) die zweite anionische Schicht wird einer zweiten kationischen Lösung ausgesetzt, um eine zweite kationische Schicht auf der zweiten anionischen Schicht zu erzeugen, wobei die zweite kationische Lösung das Polymer, das zweite Salz oder beliebige Kombinationen davon umfasst, und wobei die Beschichtung eine Vierfachschicht aus der kationischen Schicht, der anionischen Schicht, der zweiten kationischen Schicht und der zweiten anionischen Schicht umfasst.

12. Verfahren nach Anspruch 7, ferner umfassend das Abscheiden einer Primerschicht auf dem elastomeren Substrat, wobei die Primerschicht zwischen dem elastomeren Substrat und der anionischen Schicht angeordnet ist.

## Revendications

1. Procédé pour produire une barrière de diffusion de matière comprenant un revêtement sur un support élastomère, qui comporte les étapes suivantes :
(A) exposer le support élastomère à une solution cationique pour former une couche cationique sur le support élastomère, la solution cationique contenant des matériaux cationiques qui comprennent un polymère, un sel ou n'importe quelle combinaison de tels matériaux,
(B) et exposer cette couche cationique à une solution anionique pour former une couche anionique sur la couche cationique, la solution anionique contenant un polymère anionique, une particule colloïdale, un deuxième sel ou n'importe quelle combinaison de tels matériaux, et le revêtement comprenant une couche double constituée par la couche cationique et la couche anionique.

2. Procédé selon la revendication 1, dans lequel le sel contient un ion comprenant un cation NH₄⁺, K⁺, Na⁺, Li⁺, Mg²⁺, Ca²⁺, Rb⁺, Cs⁺ ou N(CH₃)₄⁺, ou n'importe quelle combinaison de tels cations.

3. Procédé selon la revendication 1, dans lequel le deuxième sel contient un ion comprenant un anion CO₃²⁻, F⁻, SO₄²⁻, H₂PO₄²⁻, C₂H₃O₂⁻, Cl⁻, NO₃⁻, Br⁻, ClO₃⁻, I⁻, ClO₄⁻, SCN⁻ ou S₂O₃²⁻, ou n'importe quelle combinaison de tels anions.

4. Procédé selon la revendication 1, qui comporte en outre l'étape suivante :
(C) exposer la couche anionique à une deuxième solution cationique pour former une deuxième couche cationique sur la couche anionique, la deuxième solution cationique contenant le polymère, le sel ou n'importe quelle combinaison de tels matériaux, et le revêtement comprenant une couche triple constituée par la couche cationique, la couche anionique et la deuxième couche cationique.

5. Procédé selon la revendication 4, qui comporte en outre l'étape suivante :
(D) exposer la deuxième couche cationique à une deuxième solution anionique pour former une deuxième couche anionique sur la deuxième couche cationique, la deuxième solution anionique contenant le polymère anionique, la particule colloïdale, le deuxième sel ou n'importe quelle combinaison de tels matériaux, et le revêtement comprenant une couche quadruple constituée par la couche cationique, la couche anionique, la deuxième couche cationique et la deuxième couche anionique.

6. Procédé selon la revendication 1, qui comporte en outre le fait de déposer une couche de primaire sur le support élastomère, la couche de primaire étant placée entre le support élastomère et la couche cationique.

7. Procédé pour produire une barrière de diffusion de matière comprenant un revêtement sur un support élastomère, qui comporte les étapes suivantes :
(A) exposer le support élastomère à une solution anionique pour former une couche anionique sur le support élastomère, la solution anionique contenant un polymère anionique, une particule colloïdale, un sel ou n'importe quelle combinaison de tels matériaux,
(B) et exposer cette couche anionique à une solution cationique pour former une couche cationique sur la couche anionique, la solution cationique contenant un polymère, un deuxième sel ou n'importe quelle combinaison de tels matériaux, et le revêtement comprenant une couche double constituée par la couche cationique et la couche anionique.

8. Procédé selon la revendication 7, dans lequel le sel contient un ion comprenant un anion CO₃²⁻, F⁻, SO₄²⁻, H₂PO₄²⁻ C₂H₃O₂⁻, Cl⁻, NO₃⁻, Br⁻, ClO₃⁻, I⁻, ClO₄⁻, SCN⁻ ou S₂O₃²⁻, ou n'importe quelle combinaison de tels anions.

9. Procédé selon la revendication 7, dans lequel le deuxième sel contient un ion comprenant un cation NH₄⁺, K⁺, Na⁺, Li⁺, Mg²⁺, Ca²⁺, Rb⁺, Cs⁺ ou N(CH₃)₄⁺, ou n'importe quelle combinaison de tels cations.

10. Procédé selon la revendication 7, qui comporte en outre l'étape suivante :
(C) exposer la couche cationique à une deuxième solution anionique pour former une deuxième couche anionique sur la couche cationique, la deuxième solution anionique contenant le polymère anionique, la particule colloïdale, le sel ou n'importe quelle combinaison de tels matériaux, et le revêtement comprenant une couche triple constituée par la couche cationique, la couche anionique et la deuxième couche anionique.

11. Procédé selon la revendication 10, qui comporte en outre l'étape suivante :
(D) exposer la deuxième couche anionique à une deuxième solution cationique pour former une deuxième couche cationique sur la deuxième couche anionique, la deuxième solution cationique contenant le polymère, le deuxième sel ou n'importe quelle combinaison de tels matériaux, et le revêtement comprenant une couche quadruple constituée par la couche cationique, la couche anionique, la deuxième couche cationique et la deuxième couche anionique.

12. Procédé selon la revendication 7, qui comporte en outre le fait de déposer une couche de primaire sur le support élastomère, la couche de primaire étant placée entre le support élastomère et la couche anionique.
